# EUROPÄISCHE PATENTSCHRIFT

(11) **EP 2 837 070 B1**
(45) Veröffentlichungstag und Bekanntmachung des Hinweises auf die Patenterteilung: **11.03.2020**
(21) Anmeldenummer: 13715962.0
(22) Anmeldetag: 09.04.2013
(51) Int. Cl.: H01R 39/48, H02K 5/10, H02K 9/06, H02K 9/28, H02K 13/00

(54) **ROTIERENDE ELEKTRISCHE MASCHINE MIT EINEM SCHAUFELRAD**
ROTARY ELECTRIC MACHINE COMPRISING A BLADE WHEEL
MACHINE TOURNANTE ÉLECTRIQUE POURVUE D'UNE ROUE À AUBES

(30) Priorität: 10.04.2012 DE 102012205758
(43) Veröffentlichungstag der Anmeldung: 18.02.2015
(73) Patentinhaber: Vitesco Technologies GmbH, 30165 Hannover (DE)
(72) Erfinder: BULATOW, Michael, 10553 Berlin (DE); WELKE, Knut, 14612 Falkensee (DE); WESCHE, Dirk, 15374 Müncheberg (DE)
(74) Vertreter: Waldmann, Georg Alexander
(86) Internationale Anmeldenummer: PCT/EP2013/057406
(87) Internationale Veröffentlichungsnummer: WO 2013/153072

(56) Entgegenhaltungen:
- DE-A1- 2 035 835
- DE-A1- 2 448 522
- JP-A- 2002 153 694

## Beschreibung

Die vorliegende Erfindung betrifft eine rotierende elektrische Maschine, insbesondere einen Elektromotor oder einen Generator, mit einem Schaufelrad. Die vorliegende Erfindung betrifft ferner ein Kraftfahrzeug mit einer solchen rotierenden elektrischen Maschine.
In modernen Kraftfahrzeugen werden zunehmend Elektromotoren verbaut. Sie werden dabei insbesondere als im Antriebsstrang vollintegrierte Antriebsmotoren oder in Hybridanwendungen beispielsweise als Startergeneratoren eingesetzt. Dabei kommen zum Teil fremderregte Synchronmaschinen zum Einsatz, die einen Rotor aus einem mit einer Erregerwicklung versehenen Blechpaket aufweisen. Dabei sind die Enden der Erregerwicklung über zwei Schleifringe, die auf der Rotorwelle angeordnet sind, herausgeführt. Über Kohlebürsten wird die Erregerspannung an die Erregerwicklung angelegt. Die beiden Schleifringe zusammen mit dem sie tragenden Grundkörper werden häufig auch einfach "Schleifring" genannt.

Bei derartigen rotierenden elektrischen Maschinen tritt das Problem auf, dass der Abrieb der Kohlebürsten in Form von elektrisch leitenden Staubteilchen in das Maschineninnere eindringt. Diese Staubteilchen können sich beispielsweise als leitfähige Schicht auf Maschinenelementen absetzen und zu elektrisch leitenden Kriechstrecken führen.
Die Druckschrift DE 100 14 310 A1 offenbart eine elektrische Maschine mit einer schwimmenden Spaltdichtung zur Abdichtung des Gehäuse-Innenraums der elektrischen Maschine. Eine derartige Spaltdichtung kann zwar das Eindringen von Staub in den Gehäuse-Innenraum erschweren, es besteht jedoch der Bedarf, den Gehäuse-Innenraum noch besser gegen das Eindringen von Bürstenstaub zu schützen.
Die Druckschrift DE 10 2008 041 650 A1 beschreibt eine elektrische Maschine mit einem Lüfter, der vorstehende Lüfterschaufel zum Verteilen von Luft aufweist, wodurch abgeriebener Bürstenstaub samt der Luft von den Schleifringen abgeführt wird.

JP 2002 153694 offenbart: Rotierende elektrische Maschine, die folgende Merkmale aufweist:
- eine Rotorwelle,
- ein Schaufelrad,
- wobei das Schaufelrad auf der Rotorwelle angeordnet ist und mit der Rotorwelle drehfest verbunden ist,
- ein Gehäuseteil, das einen Gehäuse-Innenraum der elektrischen Maschine zumindest teilweise umschließt, wobei der Gehäuse-Innenraum eingerichtet ist, die Rotorwelle aufzunehmen,
- eine Öffnung an dem Gehäuseteil, durch die die Rotorwelle aus dem Gehäuse-Innenraum teilweise herausgeführt ist, wobei das Schaufelrad der rotierenden elektrischen Maschine folgende Merkmale aufweist:
   - einen hohlzylinderförmigen Grundkörper, wobei das Schaufelrad eine Rotationsachse aufweist, um die sich die Mantelfläche in Umfangsrichtung des Grundkörpers erstreckt,
   - einen ersten, den Grundkörper in dessen Umfangsrichtung umlaufenden Endbereich und einen zweiten, den Grundkörper in dessen Umfangsrichtung umlaufenden Endbereich, wobei der erste und der zweite Endbereich in Richtung der Rotationsachse zueinander gegenüber liegen,
   - eine Nut in der Mantelfläche, wobei die Nut sich in Umfangsrichtung des Grundkörpers entlang der Mantelfläche und zwischen dem ersten und dem zweiten Endbereich des Grundkörpers erstreckt, und
   - zumindest ein stegförmiges Verwirbelungselement, das sich in der Nut zwischen dem ersten und dem zweiten Endbereich erstreckt, wodurch das zumindest eine Verwirbelungselement ausgebildet ist, bei Rotation des Schaufelrades um die Rotationsachse eine Luftbewegung zu erzeugen, die von der Mantelfläche weg führt.

Aufgabe der Erfindung ist, eine Möglichkeit anzugeben, bei der ein Eindringen von im Betrieb einer elektrischen Maschine entstandenem Bürstenstaub in das Maschineninnere auf technisch einfache und gleichzeitig besonders wirkungsvolle Weise möglichst weitgehend verhindert wird.

Diese Aufgabe wird durch den Gegenstand des unabhängigen Anspruchs 1 gelöst. Vorteilhafte Ausgestaltungen sind Gegenstand der Unteransprüche.

Erfindungsgemäss wird eine elektrische Maschine mit einem Schaufelrad angegeben, welche folgende Merkmale aufweist:
- einen hohlzylinderförmigen Grundkörper mit einer äußeren Mantelfläche, wobei das Schaufelrad eine Rotationsachse aufweist, um die sich die Mantelfläche in Umfangsrichtung des Grundkörpers erstreckt,
- einen ersten, den Grundkörper in dessen Umfangsrichtung umlaufenden Endbereich und einen zweiten, den Grundkörper in dessen Umfangsrichtung umlaufenden Endbereich, wobei der erste und der zweite Endbereich in Richtung der Rotationsachse zueinander gegenüber liegen,
- eine Nut in der Mantelfläche, wobei die Nut sich in Umfangsrichtung des Grundkörpers entlang der Mantelfläche und zwischen dem ersten und dem zweiten Endbereich des Grundkörpers erstreckt, und
- zumindest ein stegförmiges Verwirbelungselement, das sich in der Nut zwischen dem ersten und dem zweiten Endbereich erstreckt, wodurch das zumindest eine Verwirbelungselement ausgebildet ist, bei Rotation des Schaufelrades um die Rotationsachse eine Luftbewegung zu erzeugen, die von der Mantelfläche weg führt.

Unter einem Schaufelrad wird dabei hier und im Folgenden eine um dessen Rotationsachse rotierbare Einrichtung verstanden, die Verwirbelungselemente aufweist, die beim Rotieren des Schaufelrades um die Rotationsachse Luftbewegung erzeugen.
Unter einer Umfangsrichtung des hohlzylinderförmigen Grundkörpers wird die den Grundkörper in dessen Umfang umlaufende Richtung entlang der äußeren Mantelfläche des Grundkörpers verstanden.
Vorzugsweise umfasst das Schaufelrad zumindest zwei Verwirbelungselemente, die zueinander in gleichen Abständen in der Nut gleichmäßig verteilt angeordnet sind. Durch die gleichmäßige Verteilung der Verwirbelungselemente in der Nut lässt sich Unwucht bei dem Schaufelrad vermeiden.
Durch die Ausführung der Nut in der äußeren Mantelfläche und zwischen den beiden gegenüberliegenden Endbereichen des hohlzylinderförmigen Grundkörpers des Schaufelrades und durch die Ausführung des zumindest einen stegförmigen Verwirbelungselements, das sich in der Nut zwischen dem ersten und dem zweiten Endbereich erstreckt, lässt sich so zumindest eine wannenförmige Vertiefung in der Mantelfläche des Grundkörpers des Schaufelrades ausbilden, die samt dem Verwirbelungselement und den beiden Endbereichen des Grundkörpers wie ein Turbinenschaufel einer Turbine wirkt, und beim Rotieren des genannten Schaufelrades um dessen Rotationsachse eine Luftbewegung erzeugt, die von der Mantelfläche weg führt.

Gelangen Bürstenstaubteilchen in den Bereich der wannenförmigen Vertiefung, so werden diese durch die Luftbewegung von der Mantelfläche und somit dem Schaufelrad weg getragen.
Dadurch wird auf technisch einfache und gleichzeitig besonders wirkungsvolle Weise verhindert, dass die im Betrieb einer elektrischen Maschine entstandenen Bürstenstaubteichen in das Maschineninnere zu gelangen.

Das zumindest eine Verwirbelungselement ist derart ausgeführt, dass dies die Nut in Umfangsrichtung des Grundkörpers zumindest teilweise unterbricht. Mit anderen Worten: das zumindest ein Verwirbelungselement erstreckt sich nicht von dem ersten Endbereich zu dem zweiten Endbereich durchgehend. Diese Ausgestaltung bietet den Vorteil, dass durch die Unterbrechung an dem Verwirbelungselement Luftbewegung mit unterschiedlichen Turbulenzen gebildet wird. Dadurch ändert sich die Geschwindigkeit der Luftbewegung, was vorteilhaft ist beim Wegtragen von Staubteilchen in unterschiedlichen Größen.
In einer alternativen Ausgestaltung erstreckt sich das zumindest eine Verwirbelungselement von dem ersten Endbereich bis zu dem zweiten Endbereich durchgehend, wodurch das zumindest ein Verwirbelungselement die Nut in Umfangsrichtung des Grundkörpers vollständig unterbricht. Diese Ausgestaltung bietet den Vorteil, dass sich dadurch bei einer selbst konstanten Rotationsgeschwindigkeit des Schaufelrades eine weitgehend konstante aber vergleichsweise stärkere Luftbewegung erzeugt wird.
In einer weiteren bevorzugten Ausgestaltung erstreckt sich das zumindest eine Verwirbelungselement parallel zu der Rotationsachse.
In einer alternativen Ausgestaltung erstreckt sich das zumindest eine Verwirbelungselement windschief zu der Rotationsachse.

Vorzugsweise erstreckt sich das zumindest ein Verwirbelungselement sich in Umfangsrichtung des Grundkörpers des Schaufelrades helixförmig beziehungsweise wendelförmig.
Die drei zuletzt genannten Ausgestaltungen bewirken unterschiedliche Turbulenzen in der Luftbewegung, die das Schaufelrad bei der Rotation erzeugt.
In einer weiteren bevorzugten Ausgestaltung weist das zumindest ein Verwirbelungselement auf einer der Rotationsachse abgewandten Seite eine Oberfläche auf, wobei diese Oberfläche gegenüber der Mantelfläche nicht vorstehend, insbesondre zu der Mantelfläche im Wesentlichen plan, ausgebildet sind.
Die gegenüber der Mantelfläche nicht vorstehende, insbesondre zu der Mantelfläche im Wesentlichen plane, Oberfläche des Verwirbelungselements bietet den Vorteil, dass das Schaufelrad beispielsweise in einem Spritzgiessverfahren mit wenigen Fertigungsschritten als Massenware kostengünstig herstellbar ist. Zudem erzeugt ein derartig ausgebildetes Verwirbelungselement Luftbewegung mit Turbulenten, welche die Staubteilchen wirkungsvoll wegtragen, die sich in dem Bereich des Verwirbelungselements befinden.

Alternativ kann das zumindest eine Verwirbelungselement von der Rotationsachse des Schaufelrades radial ausgehend betrachtet eine Höhe aufweisen, die kleiner ist als die Höhen der beiden Endbereiche. Es ist dabei auch denkbar, dass die beiden Endbereiche jeweils eine Höhe aufweisen, die unterschiedlich groß sind.

Erfindungsgemäss wird eine rotierende elektrische Maschine angegeben, die eine Rotorwelle und ein oben beschriebenes Schaufelrad umfasst, wobei das Schaufelrad auf der Rotorwelle angeordnet und mit der Rotorwelle drehfest verbunden ist.
Derartige rotierende elektrische Maschinen eignen sich für die Verwendung in einem Kraftfahrzeug. Sie können sowohl als im Antriebsstrang vollintegrierte Antriebsmotoren, beispielsweise als Radnaben- oder Achsmotoren, als auch beispielsweise als Startergeneratoren eingesetzt werden. Dabei kann die elektrische Maschine als Elektromotor oder als Generator ausgebildet sein oder sowohl als Elektromotor als auch als Generator betreibbar sein.
Bei einer derartigen elektrischen Maschine kann das Eindringen von anfallendem Bürstenstaub in das Maschineninnere dadurch verhindert werden, dass der Staub von der durch das Schaufelrad erzeugten Luftbewegung weggetragen wird. Dazu ist das Schaufelrad in oben beschriebener Weise ausgebildet und angeordnet, dass an den Bürsten der elektrischen Maschine anfallende Staubteilchen durch die im Betrieb erzeugte Luftbewegung im Wesentlichen radial von der Rotorwelle weggetragen wird, bevor sie in den Gehäuse-Innenraum eindringen können.

Erfindungsgemäss umfasst die rotierende elektrische Maschine ein Gehäuseteil, das einen Gehäuse-Innenraum der elektrischen Maschine zumindest teilweise umschließt. Dabei ist der Gehäuse-Innenraum eingerichtet, die Rotorwelle größtenteils aufzunehmen. An dem Gehäuseteil weist die elektrische Maschine eine Öffnung auf, durch die die Rotorwelle aus dem Gehäuse-Innenraum zum Teil herausgeführt ist. Außerhalb des Gehäuse-Innenraums weist die elektrische Maschine einen Schleifring, der auf der Rotorwelle angeordnet ist. Zwischen dem Gehäuse-Innenraum und dem Schleifring und außerhalb des Gehäuse-Innenraums ist das oben beschriebene Schaufelrad angeordnet. Dabei ist das Schaufelrad eingerichtet, bei Rotation der Rotorwelle im Betrieb der elektrischen Maschine die oben genannte Luftbewegung zum Wegführen vom Bürstenstaub von der Öffnung zu erzeugen.
In einer weiteren bevorzugten Ausgestaltung der elektrischen Maschine ist das Schaufelrad auf die Rotorwelle aufsteckbar ausgebildet. Bei dieser Ausführungsform kann das Schaufelrad bei der Montage einfach auf die Rotorwelle aufgesteckt werden, sodass kaum zusätzlicher Montageaufwand notwendig ist. Bei Bedarf, wie zum Beispiel bei einer Reparatur der elektrischen Maschine, kann das Schaufelrad dann von der Rotorwelle in einfacher Weise wieder herausgezogen werden.
In noch einer weiteren bevorzugten Ausgestaltung weist die elektrische Maschine zwischen dem Gehäuse-Innenraum und dem Schleifring zumindest eine Labyrinthdichtung auf. Dabei umfasst die Labyrinthdichtung ein erstes Formelement, das die Rotorwelle umlaufend ausgebildet ist und auf der Rotorwelle angeordnet ist, und ein zweites, mit dem ersten Formelement kämmendes Formelement, das ebenfalls die Rotorwelle umlaufend ausgebildet ist und an dem Gehäuseteil angeordnet ist. Dabei weisen das erste und das zweite Formelement vorzugsweise jeweils eine Oberfläche aus einem elektrisch isolierenden Material, beispielsweise Kunststoff, auf. Die Formelemente können auch vollständig aus Kunststoff ausgebildet sein.

Unter einer Labyrinthdichtung wird hier und im Folgenden eine berührungsfreie Dichtung verstanden, deren Dichtwirkung auf der deutlichen Verlängerung des Weges durch das Labyrinth beruht. Die Wegverlängerung kann durch ein Ineinandergreifen von Formelementen auf der Rotorwelle und auf einem feststehenden Gehäuseteil erreicht werden. Dabei ist die Labyrinthdichtung konzentrisch um die Rotorwelle herum angeordnet. Die Labyrinthdichtung kann insbesondere als Mehrrillen-Labyrinthdichtung ausgebildet sein und mehrere in Reihe hintereinander geschaltete Dichtelemente aus miteinander kämmenden Formelementen aufweisen.

Bei einer derartigen rotierenden elektrischen Maschine kann das Eindringen von anfallendem Bürstenstaub in das Maschineninnere also in den Gehäuse-Innenraum dadurch verhindert werden, dass einerseits der vom Staub zurückzulegende Weg bis in den Gehäuse-Innenraum durch die Labyrinthdichtung deutlich verlängert wird, und andererseits durch Windungen der Labyrinthdichtung ein ungehindertes Eindringen des Staubs in den Gehäuse-Innenraum verhindert wird. Das Vorsehen einer Labyrinthdichtung erhöht somit zusätzlich die Dichtwirkung und ergänzt damit die Wirkung des Schaufelrads vorteilhaft.

In einer bevorzugten Ausgestaltung ist das Schaufelrad der Labyrinthdichtung schleifringseitig vorgeschaltet. Bei dieser Ausgestaltung gelangt ein von den Schleifringen kommender Staubstrom somit zunächst in den Wirkungsbereich des Schaufelrads, das einen großen Teil der Staubteilchen aus dem kritischen Bereich entfernt. Lediglich ein stark ausgedünnter Staubstrom trifft somit noch auf die Labyrinthdichtung.

In noch einer weiteren bevorzugten Ausgestaltung der elektrischen Maschine sind das Schaufelrad und das erste Formelement einstückig ausgebildet. Dabei können das Schaufelrad und das erste Formelement in einem Spritzgießverfahren als einstückiges Gußteil in einfacher Weise als Massenware hergestellt werden.
In noch einer weiteren bevorzugten Ausgestaltung weist die elektrische Maschine ein trichterförmiges Strömungsleitelement in der Öffnung und zwischen dem Schaufelrad und dem Gehäuse-Innenraum auf, das die Rotorwelle in deren Umfangsrichtung umlaufend ausgebildet ist und eingerichtet ist, die von dem Schaufelrad erzeugte Luftbewegung in einer von dem Gehäuse-Innenraum wegführenden Richtung umzuleiten.
Vorzugsweise ist das Strömungsleitelement mit dem Gehäuseteil einstückig ausgebildet.
Gemäß einem weiteren Aspekt der Erfindung ist ein Kraftfahrzeug bereitgestellt, das eine oben beschriebene elektrische Maschine aufweist. Das Kraftfahrzeug kann dabei als Elektro- oder Hybridfahrzeug ausgebildet sein, bei dem die elektrische Maschine als Antrieb des Kraftfahrzeugs dient.

Vorteilhafte Ausgestaltungen der oben dargestellten elektrischen Maschine sind, soweit im Übrigen auf das oben genannte Kraftfahrzeug übertragbar, auch als vorteilhafte Ausgestaltungen des Kraftfahrzeugs anzusehen.
Ausführungsformen der Erfindung werden nun anhand der beiliegenden Figuren näher beschrieben. Dabei zeigen
- Figur 1: schematisch ein Schaufelrad einer Ausführungsform der Erfindung in einer Perspektivdarstellung,
- Figur 2, 2A: schematisch einen Abschnitt einer rotierenden elektrischen Maschine gemäß einer Ausführungsform der Erfindung in einer Querschnittdarstellung, und
- Figur 3: schematisch einen Abschnitt einer rotierenden elektrischen Maschine gemäß einer weiteren Ausführungsform der Erfindung in einer Querschnittdarstellung.

Gleiche Teile sind in den Figuren mit denselben Bezugszeichen versehen.

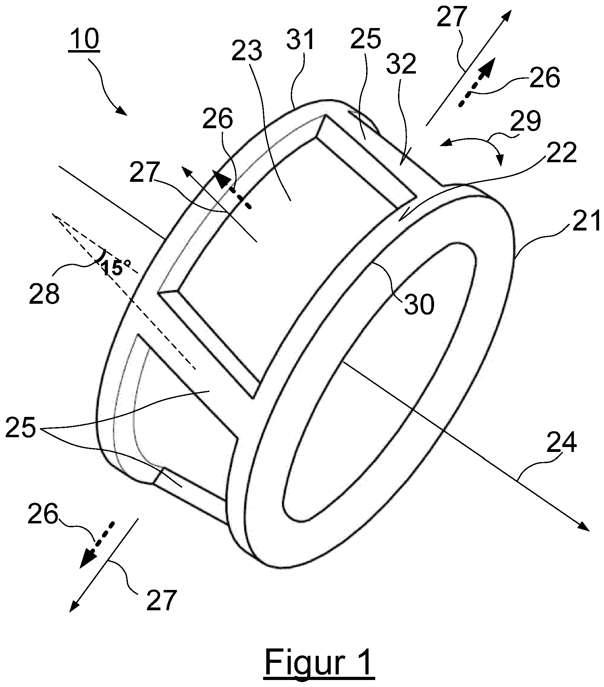

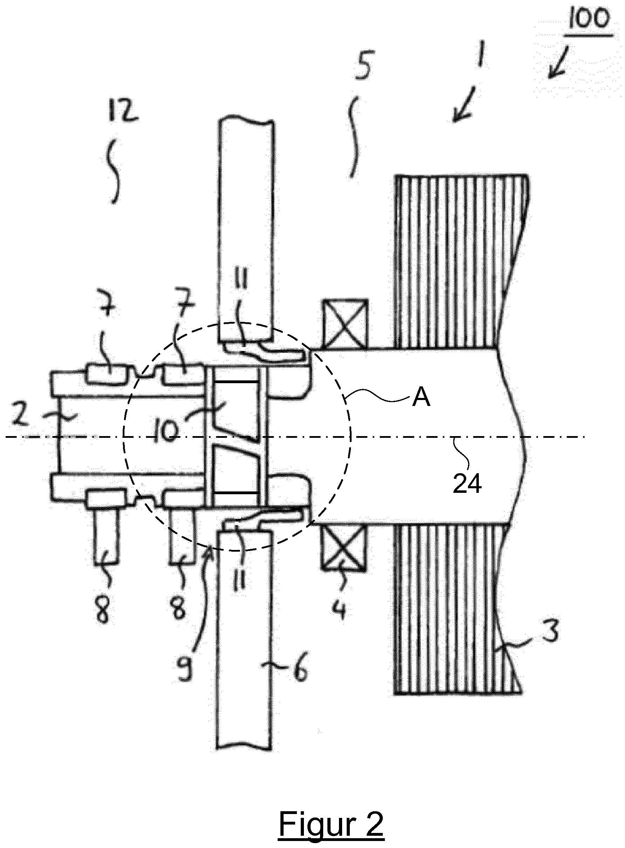

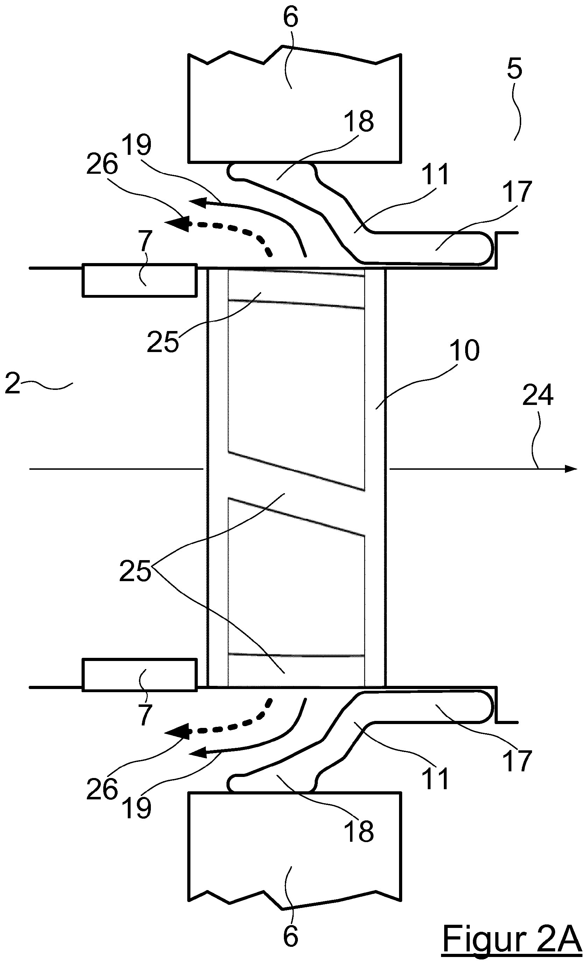

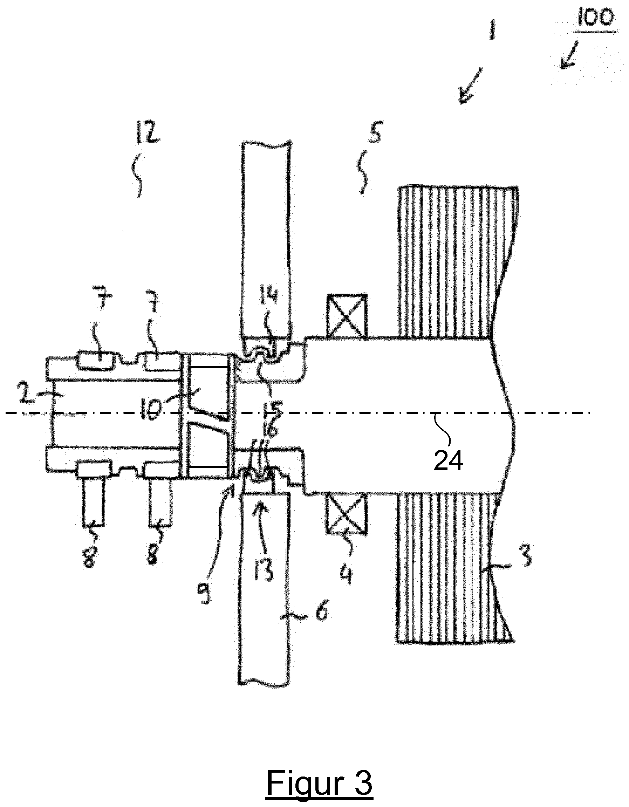

Figur 1 zeigt in einer schematischen Perspektivdarstellung ein Schaufelrad 10 für eine nachfolgend zu beschreibende in Figuren 2, 2A und 3 dargestellte rotierende elektrische Maschine 100.
Das Schaufelrad 10 umfasst einen hohlzylinderförmigen Grundkörper 21, zylinderförmige Mantelfläche 22 aufweist, die den Grundkörper 21 in dessen Umfangsrichtung 29 umläuft und umfangsmäßig umschließt. Das Schaufelrad 10 ist um eine Rotationsachse 24 rotierbar ausgeführt, wobei die Rotationsachse 24 sich parallel zu der Mantelfläche 22 und durch die Kreismitte des Grundkörpers 21 hindurch erstreckt.
Das Schaufelrad 10 weist ferner einen ersten, den Grundkörper 21 in dessen Umfangsrichtung 29 umlaufenden Endbereich 30 und einen zweiten, ebenfalls den Grundkörper 21 in dessen Umfangsrichtung 29 umlaufenden Endbereich 31 auf. Dabei liegen der erste Endbereich 30 und der zweite 31 Endbereich in Richtung der Rotationsachse 24 betrachtet zueinander gegenüber.
Auf der Mantelfläche 22 weist das Schaufelrad 10 eine den Grundkörper 21 in dessen Umfangsrichtung 29 umlaufende, sich entlang der Mantelfläche 22 und zwischen dem ersten und dem zweiten Endbereich 30, 31 des Grundkörpers 21 erstreckende Nut 23 auf.

In dieser Nut 23 ist eine Anzahl von zumindest drei stegförmigen Verwirbelungselementen 25 vorgesehen, die zueinander in gleichen Abständen in der Nut 23 gleichmäßig verteilt angeordnet sind. Zwischen den Verwirbelungselementen 25 bilden sich somit wannenförmige Vertiefungen, die rautenähnliche Oberfläche aufweisen. Dabei verlaufen die Verwirbelungselemente 25 jeweils um einen Winkel 28 von ca. 15° windschief zu der Rotationsachse 24. Durch die windschiefe Anordnung der Verwirbelungselemente 25 gegenüber der Rotationsachse 24 erzeugen diese beim Rotieren des Schaufelrades 10 um die Rotationsachse 24 Luftbewegungen 26, die von der Mantelfläche 22 weg und in senkrecht zu der Rotationsachse 24 verlaufende Richtung 27 fließen.

Die Verwirbelungselemente 25 weisen auf einer der Rotationsachse 24 abgewandten Seite jeweils eine Oberfläche 32 auf, wobei diese Oberflächen 32 und die Mantelfläche 22 zueinander plan ausgebildet sind.

Figuren 2, 2A zeigen einen Abschnitt einer als fremderregte Synchronmaschine ausgebildeten elektrischen Maschine 100 in einer Querschnittdarstellung senkrecht zu einer Rotorwelle 2 der elektrischen Maschine 100, wobei Figur 2A wiederum einen Abschnitt A der in Figur 2 dargestellten elektrischen Maschine 100 zeigt. Der Stator der elektrischen Maschine 100 ist nicht gezeigt. Der Rotor 1 umfasst ein auf der Rotorwelle 2 angeordnetes Rotorblechpaket 3.

Das Rotorblechpaket 3 ist in einem Gehäuse-Innenraum 5 angeordnet. Die Rotorwelle 2 ist in dem Gehäuse-Innenraum 5 drehbar gelagert, wobei nur ein Lager 4 dargestellt ist. Die Rotorwelle 2 ist durch eine Öffnung 9 in einem Gehäuseteil 6, beispielsweise einem Lagerschild, aus dem Gehäuse-Innenraum 5 zum Teil herausgeführt.

Außerhalb des Gehäuse-Innenraums 5 sind auf der Rotorwelle 2 zwei Schleifringe 7 angeordnet, über die mittels Kohlebürsten 8 die Erregerspannung an nicht gezeigte Erregerwicklungen des Rotors 1 angelegt wird.

Eine nicht gezeigte Schleifringkapsel kann die Schleifringe 7 und die Kohlebürsten 8 und somit einen Bürstenraum 12 umgeben.

Im Betrieb des Rotors 1 wird im Bürstenraum 12 elektrisch leitender Kohlestaub von den Kohlebürsten 8 erzeugt. Durch die Öffnung 9 kann beispielsweise der Kohlestaub in den Gehäuse-Innenraum 5 dringen, sich dort als elektrisch leitende Schicht absetzen und zu Kriechströmen führen.

Um dies zu verhindern, weist der Rotor 1 im Bereich der Öffnung 9 auf der Rotorwelle 2 ein oben beschriebenes Schaufelrad 10 auf. Das Schaufelrad 10 ist drehfest mit der Rotorwelle 2 verbunden, rotiert im Betrieb der elektrischen Maschine 100 mit der Rotorwelle 2 um eine Rotorachse mit, die zugleich die Rotationsachse 24 des Schaufelrades 10 ist. Das Schaufelrad 10 erzeugt dabei die in Figur 1 dargestellte Luftbewegung 26, die Kohlestaubteilchen von der Öffnung 9 wegtragen.

In der Öffnung 9 ist ein mit dem Gehäuseteil 6 einstückig ausgebildetes Strömungsleitelement 11 vorgesehen, die die Wirkung des Schaufelrads 10 unterstützt. So wie in Figur 2A detailliert dargestellt ist, ist das Strömungsleitelement 11 trichterförmig geformt und weist an einem dem Gehäuse-Innenraum 5 zugewandten Ende 17 einen kleineren Durchmesser auf als an einem dem Gehäuse-Innenraum 5 abgewandten und somit den Schleifringen 7 zugewandten Ende 18.

Im Betrieb der elektrischen Maschine 100 leitet das Strömungsleitelement 11 die von dem Schaufelrad 10 erzeugte Luftbewegung 26 in einer von dem Gehäuse-Innenraum 5 wegführenden Richtung 19, sodass die Kohlestaubteilchen von der Öffnung 9 wirksam weggetragen werden.

Figur 3 zeigt einen Abschnitt einer weiteren als fremderregte Synchronmaschine ausgebildeten elektrischen Maschine 100 in einer Querschnittdarstellung senkrecht zu der Rotorwelle 2 der elektrischen Maschine 100. Die elektrische Maschine in Figur 3 unterscheidet sich von der in Figuren 2, 2A gezeigten elektrischen Maschine dadurch, dass anstelle eines Strömungsleitelements 11 eine Labyrinthdichtung 13 zusätzlich zum Schaufelrad 10 vorgesehen ist, um das Eindringen vom Kohlestaub in den Gehäuse-Innenraum 5 zu verhindern. Dabei ist das Schaufelrad 10 der Labyrinthdichtung 13 schleifringseitig vorgeschaltet, wird also von in Richtung des Gehäuse-Innenraums 5 strömender Luft zuerst passiert.

In einer nicht gezeigten Ausführungsform ist das Schaufelrad 10 der Labyrinthdichtung 13 schleifringseitig nachgeschaltet. Es können auch mehrere Schaufelräder 10 und/oder Labyrinthdichtung 13 vorgesehen sein.

Die Labyrinthdichtung 13 ist durch ein erstes Formelement 15, das drehfest mit der Rotorwelle 2 verbunden ist, sowie durch ein zweites Formelement 14, das mit dem Gehäuseteil 6 verbunden und in der Öffnung 9 angeordnet ist, ausgebildet.

Die Formelemente 14, 15 weisen miteinander kämmende und einander nicht berührende "Dichtlippen" 16 auf und sind aus einem Kunststoff oder aus einem anderen elektrisch nicht leitenden Werkstoff ausgebildet. Zwischen diesen Dichtlippen 16 hindurch ist ein Pfad gebildet, der in Richtung entlang der Rotationsachse 24 betrachtet eine Form einer Rechteckschwingung ausweist und somit deutlich länger ist als die Tiefe der Öffnung 9. Die vom Kohlestaub in den Gehäuse-Innenraum 5 zurückzulegende Strecke ist somit durch die Labyrinthdichtung 13 deutlich verlängert, woraus sich die Dichtwirkung ergibt.

In einer nicht gezeigten Ausführungsform weist die Labyrinthdichtung eine größere Anzahl von hintereinander angeordneten, miteinander kämmenden Dichtlippen auf. Dadurch wird der durch den Kohlestaub zurückzulegende Weg zusätzlich verlängert und die Dichtwirkung erhöht.

Der Schutzbereich ist durch die Ansprüche bestimmt.

## Patentansprüche

1. Rotierende elektrische Maschine (100), die folgende Merkmale aufweist:
- eine Rotorwelle (2),
- ein Schaufelrad (10),
- wobei das Schaufelrad (10) auf der Rotorwelle (2) angeordnet ist und mit der Rotorwelle (2) drehfest verbunden ist,
- ein Gehäuseteil (6), das einen Gehäuse-Innenraum (5) der elektrischen Maschine (100) zumindest teilweise umschließt, wobei der Gehäuse-Innenraum (5) eingerichtet ist, die Rotorwelle (2) aufzunehmen,
- eine Öffnung (9) an dem Gehäuseteil (6), durch die die Rotorwelle (2) aus dem Gehäuse-Innenraum (5) teilweise herausgeführt ist,
- einen Schleifring (7), der außerhalb des Gehäuse-Innenraums (5) und auf der Rotorwelle (2) angeordnet ist,
- wobei das Schaufelrad (10) zwischen dem Gehäuse-Innenraum (5) und dem Schleifring (7) und außerhalb des Gehäuse-Innenraums (5) angeordnet ist, wodurch das Schaufelrad (10) eingerichtet ist, die Luftbewegung (26) zum Wegführen von Staub von der Öffnung (9) zu erzeugen,
wobei das Schaufelrad (10) der rotierenden elektrischen Maschine (100) folgende Merkmale aufweist:
- einen hohlzylinderförmigen Grundkörper (21) mit einer äußeren Mantelfläche (22), wobei das Schaufelrad (10) eine Rotationsachse (24) aufweist, um die sich die Mantelfläche (22) in Umfangsrichtung (29) des Grundkörpers (21) erstreckt,
- einen ersten, den Grundkörper (21) in dessen Umfangsrichtung (29) umlaufenden Endbereich (30) und einen zweiten, den Grundkörper (21) in dessen Umfangsrichtung (29) umlaufenden Endbereich (31), wobei der erste (30) und der zweite (31) Endbereich in Richtung der Rotationsachse (24) zueinander gegenüber liegen,
- eine Nut (23) in der Mantelfläche (22), wobei die Nut (23) sich in Umfangsrichtung (29) des Grundkörpers (21) entlang der Mantelfläche (22) und zwischen dem ersten (30) und dem zweiten (31) Endbereich des Grundkörpers (21) erstreckt, und
- zumindest ein stegförmiges Verwirbelungselement (25), das sich in der Nut (23) zwischen dem ersten (30) und dem zweiten (31) Endbereich erstreckt, wodurch das zumindest eine Verwirbelungselement (25) ausgebildet ist, bei Rotation des Schaufelrades (10) um die Rotationsachse (24) eine Luftbewegung (26) zu erzeugen, die von der Mantelfläche (22) weg führt.

2. Rotierende elektrische Maschine (100) nach Anspruch 1,
wobei das Schaufelrad (10) auf die Rotorwelle (2) aufsteckbar ausgebildet ist.

3. Rotierende elektrische Maschine (100) nach einem der vorhergehenden Ansprüche,
wobei zwischen dem Gehäuse-Innenraum (5) und dem Schleifring (7) zumindest eine Labyrinthdichtung (13) vorgesehen ist, die ein erstes, die Rotorwelle (2) umlaufendes Formelement (15) auf der Rotorwelle (2) und ein zweites, mit dem ersten Formelement (15) kämmendes und die Rotorwelle (2) umlaufendes Formelement (14) an dem Gehäuseteil (6) umfasst.

4. Rotierende elektrische Maschine (100) nach dem vorhergehenden Anspruch,
wobei das Schaufelrad (10) und das erste Formelement (15) einstückig ausgebildet sind.

5. Rotierende elektrische Maschine (100) nach Anspruch 1,
wobei die elektrische Maschine (100) in der Öffnung (9) und zwischen dem Schaufelrad (10) und dem Gehäuse-Innenraum (5) ein die Rotorwelle (2) umlaufendes trichterförmiges Strömungsleitelement (11) aufweist, das ausgebildet ist, die von dem Schaufelrad (10) erzeugte Luftbewegung (26) in einer von dem Gehäuse-Innenraum (5) wegführenden Richtung (19) umzuleiten.

6. Rotierende elektrische Maschine (100) nach dem vorhergehenden Anspruch,
wobei das Strömungsleitelement (11) mit dem Gehäuseteil (6) einstückig ausgebildet ist.

7. Rotierende elektrische Maschine (100) nach Anspruch 1,
wobei das zumindest eine Verwirbelungselement (25) sich von dem ersten Endbereich (30) bis zu dem zweiten Endbereich (31) erstreckt, wodurch das zumindest eine Verwirbelungselement (25) die Nut (23) in Umfangsrichtung (29) des Grundkörpers (21) vollständig unterbricht.

8. Rotierende elektrische Maschine (100) nach Anspruch 1,
wobei das zumindest eine Verwirbelungselement (25) sich parallel zu der Rotationsachse (24) erstreckt.

9. Rotierende elektrische Maschine (100) nach Anspruch 1,
wobei das zumindest eine Verwirbelungselement (25) sich windschief zu der Rotationsachse (24) erstreckt.

10. Rotierende elektrische Maschine (100) nach Anspruch 1,
wobei das zumindest eine Verwirbelungselement (25) sich helixförmig erstreckt.

11. Rotierende elektrische Maschine (100) nach Anspruch 1,
wobei das zumindest eine Verwirbelungselement (25) auf einer der Rotationsachse (24) abgewandten Seite eine Oberfläche (32) aufweist, wobei diese Oberfläche (32) gegenüber der Mantelfläche (22) nicht vorstehend, insbesondre zu der Mantelfläche (22) im Wesentlichen plan, ausgebildet sind.

12. Kraftfahrzeug mit einer rotierenden elektrischen Maschine (100) nach einem der Ansprüche 1 bis 11.

## Claims

1. Rotating electric machine (100) that comprises the following features:
- a rotor shaft (2),
- an impeller wheel (10),
- wherein the impeller wheel (10) is arranged on the rotor shaft (2) and is connected to the rotor shaft (2) in a non-rotatable manner,
- a housing part (6) that encompasses at least in part a housing inner space (5) of the electric machine (100), wherein the housing inner space (5) is designed so as to receive the rotor shaft (2),
- an opening (9) on the housing part (6), through which the rotor shaft (2) is guided in part out of the housing inner space (5),
- a slip ring (7) that is arranged outside the housing inner space (5) and on the rotor shaft (2),
- wherein the impeller wheel (10) is arranged between the housing inner space (5) and the slip ring (7) and outside the housing inner space (5), as a consequence of which the impeller wheel (10) is designed so as to generate the air movement (26) for the purpose of carrying away dust from the opening (9)
wherein the impeller wheel (10) of the rotating electric machine (100) comprises the following features:
- a hollow cylindrical base body (21) having an outer peripheral surface (22), wherein the impeller wheel (10) comprises an axis of rotation (24) about which the peripheral surface (22) extends in the circumferential direction (29) of the base body (21),
- a first end region (30) that encircles the base body (21) in the circumferential direction (29) of said base body, and a second end region (31) that encircles the base body (21) in the circumferential direction (29) of said base body, wherein the first end region (30) and the second end region (31) lie opposite one another in the direction of the axis of rotation (24),
- a groove (23) in the peripheral surface (22), wherein the groove (23) extends in the circumferential direction (29) of the base body (21) along the peripheral surface (22) and between the first end region (30) and the second end region (31) of the base body (21), and
- at least one web-shaped impeller element (25) that extends in the groove (23) between the first end region (30) and the second end region (31), as a consequence of which the at least one impeller element (25) is designed so as to generate an air movement (26) as the impeller wheel (10) rotates about the axis of rotation (24) and said air movement flows away from the peripheral surface (22).

2. Rotating electric machine (100) according to Claim 1, wherein the impeller wheel (10) is embodied in such a manner that it can be plugged onto the rotor shaft (2).

3. Rotating electric machine (100) according to either of the preceding claims, wherein at least one labyrinth seal (13) is provided between the housing inner space (5) and the slip ring (7) and said labyrinth seal comprises on the rotor shaft (2) a first form element (15) that encircles the rotor shaft (2), and a second form element (14) on the housing part (6) that meshes with the first form element (15) and encircles the rotor shaft (2).

4. Rotating electric machine (100) according to the preceding claim, wherein the impeller wheel (10) and the first form element (15) are embodied as one piece.

5. Rotating electric machine (100) according to Claim 1, wherein the electric machine (100) comprises in the opening (9) and between the impeller wheel (10) and the housing inner space (5) a funnel-shaped flow-guiding element (11) that encircles the rotor shaft (2) and is embodied in such a manner that the air movement (26) that is generated by the impeller wheel (10) is diverted in a direction (19) that leads away from the housing inner space (5).

6. Rotating electric machine (100) according to the preceding claim, wherein the flow-guiding element (11) is embodied as one piece with the housing part (6).

7. Rotating electric machine (100) according to Claim 1, wherein the at least one impeller element (25) extends from the first end region (30) as far as the second end region (31), as a consequence of which the at least one impeller element (25) completely interrupts the groove (23) in the circumferential direction (29) of the base body (21).

8. Rotating electric machine (100) according to Claim 1, wherein the at least one impeller element (25) extends in parallel with the axis of rotation (24).

9. Rotating electric machine (100) according to Claim 1, wherein the at least one impeller element (25) extends in an inclined manner with respect to the axis of rotation (24).

10. Rotating electric machine (100) according to Claim 1, wherein the at least one impeller element (25) extends in the form of a helix.

11. Rotating electric machine (100) according to Claim 1, wherein the at least one impeller element (25) comprises a surface (32) on a face that is remote from the axis of rotation (24), wherein this surface (32) is embodied with respect to the peripheral surface (22) not protruding, in particular in an essentially planar manner with respect to the peripheral surface (22).

12. Motor vehicle having a rotating electric machine (100) according to any one of Claims 1 to 11.

## Revendications

1. Machine tournante électrique (100), qui présente les caractéristiques suivantes :
- un arbre de rotor (2),
- une roue à aubes (10),
- la roue à aubes (10) étant disposée sur l'arbre de rotor (2) et étant reliée de manière solidaire en rotation à l'arbre de rotor (2),
- une partie de carter (6) qui entoure au moins partiellement un espace intérieur de carter (5) de la machine électrique (100), l'espace intérieur de carter (5) étant conçu pour recevoir l'arbre de rotor (2),
- une ouverture (9) au niveau de la partie de carter (6), ouverture à travers laquelle l'arbre de rotor (2) est guidé partiellement hors de l'espace intérieur de carter (5),
- une bague collectrice (7) qui est disposée à l'extérieur de l'espace intérieur de carter (5) et sur l'arbre de rotor (2),
- la roue à aubes (10) étant disposée entre l'espace intérieur de carter (5) et la bague collectrice (7) et à l'extérieur de l'espace intérieur de carter (5), de sorte que la roue à aubes (10) soit conçue pour produire le déplacement d'air (26) pour éloigner la poussière de l'ouverture (9),
la roue à aubes (10) de la machine tournante électrique (100) présentant les caractéristiques suivantes :
- un corps de base (21) de forme cylindrique creuse doté d'une surface d'enveloppe extérieure (22), la roue à aubes (10) présentant un axe de rotation (24) autour duquel la surface d'enveloppe (22) s'étend dans la direction périphérique (29) du corps de base (21),
- une première région d'extrémité (30) entourant le corps de base (21) dans sa direction périphérique (29) et une deuxième région d'extrémité (31) entourant le corps de base (21) dans sa direction périphérique (29), la première (30) et la deuxième (31) région d'extrémité étant en regard l'une de l'autre dans la direction de l'axe de rotation (24),
- une rainure (23) dans la surface d'enveloppe (22), la rainure (23) s'étendant dans la direction périphérique (29) du corps de base (21) le long de la surface d'enveloppe (22) et entre la première (30) et la deuxième (31) région d'extrémité du corps de base (21), et
- au moins un élément de tourbillonnement (25) en forme d'entretoise, lequel s'étend dans la rainure (23) entre la première (30) et la deuxième (31) région d'extrémité, de sorte que ledit au moins un élément de tourbillonnement (25) soit conçu pour, lors de la rotation de la roue à aubes (10) autour de l'axe de rotation (24), produire un déplacement d'air (26) qui s'éloigne de la surface d'enveloppe (22).

2. Machine tournante électrique (100) selon la revendication 1,
dans laquelle la roue à aubes (10) est réalisée de manière enfichable sur l'arbre de rotor (2).

3. Machine tournante électrique (100) selon l'une des revendications précédentes,
dans laquelle au moins un joint d'étanchéité à labyrinthe (13) est prévu entre l'espace intérieur de carter (5) et la bague collectrice (7), lequel joint d'étanchéité comporte un premier élément façonné (15), entourant l'arbre de rotor (2), sur l'arbre de rotor (2) et un deuxième élément façonné (14), venant en prise avec le premier élément façonné (15) et entourant l'arbre de rotor (2), sur la partie de carter (6).

4. Machine tournante électrique (100) selon la revendication précédente,
dans laquelle la roue à aubes (10) et le premier élément façonné (15) sont réalisés d'un seul tenant.

5. Machine tournante électrique (100) selon la revendication 1,
dans laquelle la machine électrique (100) comprend un élément de guidage d'écoulement (11) en forme d'entonnoir entourant l'arbre de rotor (2) dans l'ouverture (9) et entre la roue à aubes (10) et l'espace intérieur de carter (5), lequel élément de guidage d'écoulement est conçu pour dévier le déplacement d'air (26) produit par la roue à aubes (10) dans une direction (19) s'éloignant de l'espace intérieur de carter (5).

6. Machine tournante électrique (100) selon la revendication précédente,
dans laquelle l'élément de guidage d'écoulement (11) est réalisé d'un seul tenant avec la partie de carter (6).

7. Machine tournante électrique (100) selon la revendication 1,
dans laquelle ledit au moins un élément de tourbillonnement (25) s'étend à partir de la première région d'extrémité (30) jusqu'à la deuxième région d'extrémité (31), de sorte que ledit au moins un élément de tourbillonnement (25) interrompe complètement la rainure (23) dans la direction périphérique (29) du corps de base (21).

8. Machine tournante électrique (100) selon la revendication 1,
dans laquelle ledit au moins un élément de tourbillonnement (25) s'étend parallèlement à l'axe de rotation (24).

9. Machine tournante électrique (100) selon la revendication 1, dans laquelle ledit au moins un élément de tourbillonnement (25) s'étend de manière inclinée par rapport à l'axe de rotation (24) .

10. Machine tournante électrique (100) selon la revendication 1,
dans laquelle ledit au moins un élément de tourbillonnement (25) s'étend de manière hélicoïdale.

11. Machine tournante électrique (100) selon la revendication 1,
dans laquelle ledit au moins un élément de tourbillonnement (25) comprend une surface (32) sur un côté opposé à l'axe de rotation (24), dans laquelle ces surface (32) ne sont pas réalisées de manière saillante par rapport à la surface d'enveloppe (22), en particulier sont réalisées de manière plane par rapport à la surface d'enveloppe (22).

12. Véhicule automobile comprenant une machine tournante électrique (100) selon l'une des revendications 1 à 11.
